# EUROPEAN PATENT SPECIFICATION

(11) **EP 3 734 376 B1**
(45) Date of publication and mention of the grant of the patent: **05.05.2021**
(21) Application number: 19171680.2
(22) Date of filing: 29.04.2019
(51) Int. Cl.: G05B 19/042, G05B 15/02, G05B 19/418

(54) **SYSTEM, COMPUTER SYSTEM AND METHOD FOR CONTROLLING DISTRIBUTED ACTUATORS**
SYSTEM, COMPUTERSYSTEM UND VERFAHREN ZUR STEUERUNG VERTEILTER AKTUATOREN
SYSTÈME, SYSTÈME INFORMATIQUE ET PROCÉDÉ DE COMMANDE D'ACTIONNEURS DISTRIBUÉS

(43) Date of publication of application: 04.11.2020
(73) Proprietor: Pedrito IP, s.r.o., Nová Ulice 779 00 Olomouc (CZ)
(72) Inventor: Hovorka, Marek, 779 00 Olomouc (CZ); Kudelka, Milos, 779 00 Olomouc (CZ); Roupec, Petr, 779 00 Olomouc (CZ)
(74) Representative: Patentanwälte Bressel und Partner mbB

(56) References cited:
- EP-A1- 3 012 697
- US-A1- 2012 239 808

## Description

The invention relates to a system and method for controlling distributed actuators. The actuators may be spatially distributed. According to one example, they are distributed within a private home, an office environment, a public space, a production facility, a building or a commercial space.

It is known to distribute actuators e.g. within a building and in particular a private home. The actuators may each operate associated units and in particular technical units, such as boilers, heat pumps, AC units, HVAC units, window blinds, garage doors and the like. For doing so, they need to be controlled in accordance with defined control rules. Typically, such control is done in an automated manner so that the actuators may form a distributed automation system in which each actuator preferably fulfills a specific automation task (e.g. temperature control). Thus, the system disclosed herein may also be referred to as a (distributed) automation system or (distributed) control system, the actuators of said systems e.g. performing automated control tasks.

For controlling each of the actuators control devices are used, such as control computers e.g. in form of PLCs. Typically, this results in a number of different control devices (e.g. control devices of different manufacturers) having to be integrated into the overall system and e.g. into one private home, one office space or one commercial space. This requires significant efforts for setting up and running the system. Specifically, each of the control devices has to be programmed according to its specific needs and addressed according to its specific communication protocol. This is even more complicated in case the actuators and/or control devices should also communicate with one another. In consequence, after installing the system e.g. by an electrician, professional programmers have to be hired that can handle the different control-device-specific communication protocols and programming tools and take into account other characteristics of the various control devices.

Note that programming the control devices is necessary so that they can fulfill their respective (automated) control tasks. For doing so, control-device-specific programming tools have to be used in order to implement an automation logic.

In summary, integrating controlled actuators and in particular actuators that are controlled by control devices of different manufacturers into a common system has been accompanied with various problems so far. Often, the actual end users of the system are not able to maintain, set up and/or adapt the distributed system of controlled actuators, or at least not without intensive efforts. Rather, these tasks have to be delegated to a professional.

US 2012/0239808 A1 disclsoses a site controller for use in a communication system. The site controller can be configured to receive original data messages and repeated data messages, identify remote devices associated with sensor data signals of received data messages and repeated data messages, and provide information related to the sensor data signals to a wide area network for access by a first host computer. It is also disclosed that an applications server may send control signals to the site controller for commanding acutators.

EP 3 012 697 A1 discloses an I/O module including: a first interface including connectors each of which is connected to a field device; a second interface connected to a controller that controls the field device; a third interface connected to an external setting device that outputs a setting instruction; and a setting adjustor configured to set tag information, which identifies each of the connectors, to each of the connectors based on the setting instruction input from the setting device via the third interface.

An object of the present invention is to simplify the operability of a plurality of actuators distributed within a common system (e.g. within a common environment, such as a building).

This object is solved by a system and a method according to the attached independent claims 1 and 13. Advantageous embodiments are defined in the dependent claims. Unless mentioned or evident otherwise, the previous features, aspects and variants may also be provided in the context of the present solution. Although the invention will be discussed mainly with respect to a system in the following, any variants, aspects, embodiments, features and remarks discussed in the connection with said system may also be provided in connection with the computer system and the method defined in the independent claims.

Note that the terms automation and control may generally be used interchangeably herein, unless mentioned or evident otherwise. The same applies to the terms software application, software module and software component. Any data mentioned herein may be digital data and any signal and any instruction may be digital and/or data-based as well. Also, any steps or measures mentioned herein may be performed automatically and/or in a computer-implemented manner.

According to a basic idea, the disclosed solution seeks to simplify handling of the control devices and in particular programming, addressing and/or operating the control devices from an end user's perspective. For doing so, it is suggested to limit the control activities that are performed by the control devices, in particular with regard to generating, processing and/or determining control instructions for actuators connected thereto. In fact, it is preferred that the control devices do not perform actual automation tasks and/or automation logic. For example, it may be provided that no current states of e.g. an actuator and/or no control actions to achieve a desired state are determined by the control devices. Instead, this may be provided by another system and in particular by a computer system to which the control devices are connected.

In more detail, said computer system (but preferably not the control devices themselves) may perform automation logic and/or execute control algorithms to determine suitable control actions. Specifcally, they may generate suitable control instructions based on which the actuators are controlled. Note that the term "suitable" as used herein may generally express "suitable for achieving a desired state".

Thus, figuratively speaking, compared to known solutions performing distributed control tasks, the automation tasks and/or the determination of control instructions is taken out of the control devices and instead provided by a computer system to which a plurality of control devices is connected. This computer system may act as a virtual controller or virtual control assembly and generate control instructions for the distributed actuators, wherein the control devices may e.g. only be used to pass said control instructions on to the actuators or, generally, use said control instructions to control the actuators accordingly, without determining said instructions themselves.

The computer system preferably includes or may access information required for performing the control/automation tasks. It sends generated control instructions to the control devices which then (preferably without logically processing the control instructions and/or altering the control actions defined thereby) forward them or signals (e.g. voltage levels) generated based thereon to connected actuators.

The required information may be downloaded and/or provided to the computer system in advance and e.g. simply by identifying which control devices are present within the system and, preferably, by identifying which actuators are connected to which communication ports of the control devices. This can be done by an electrician or even by the user himself and requires no detailed knowledge or expertise.

Still further, for performing the automation tasks by means of the actuators, the computer system preferably includes software applications which implement automation logic and/or automation algorithms to determine control instructions. These software applications (also called AAUs herein) may be easily accessible by a user, e.g. for setting control parameters of an actuator. Yet, these software applications may operate independently of the control devices to which the actuators are connected.

For doing so, the computer system may comprise sufficient information (e.g. the mapping information, communication information and/or assignment information discussed below) to, preferably without any further user input, transfer (i.e. automatically) a determined control instruction to a control device. Based on the available information, this may be done according to a communication protocol and/or according to a data specification as required by each specific control device. Thus, the tasks of generating the control instructions (e.g. by way of software applications) and of communicating them to the control devices may be decoupled from one another. Specifically, said tasks may be provided by different software components of the computer system.

Accordingly, neither the determination of the control instruction, nor sending it in an appropriate format to the correct control devices and/or actuators thus requires a user to take specifics of the control devices into account. Rather, such specifics may be considered by and in particular stored within the computer system.

This limits knowledge and expertise required for setting up and operating the system and may in particular limit the need for professional programmers. Rather, figuratively speaking, the computer system may simulate or emulate and/or may replace functionalities that are typically provided by the control devices themselves (e.g. by performing automation/control logic and/or by executing automation/control algorithms). For doing so, uniform and/or standard programming methods and in particular preprogrammed software applications (e.g. AAUs) designed to perform required control tasks may be used. As a result, no direct logic-programming of the control devices needs to be implemented.

Further, the generated control instructions may be forwarded according to communication protocols as required by the control devices to which the actuators are connected and/or may be communicated in formats required by the actuators. Yet, since information on suitable formats and communication protocols can e.g. be prestored, this can be done automatically by the computer system. Again, little or no knowledge needs to be provided by the user with respect to such formats and protocols.

Due to the above advantages, flexibility of the system is increased since adding or exchanging control devices may simply require updating the information provided to the computer system (e.g. the addressing and/or mapping information discussed herein). Yet, it may not be necessary to write a completely new control-device-specific control programme or control algorithm, since the tasks of generating control instructions may still be performed by the software applications that may essentially be or operate independently of any control-device-specifics.

As a result, the control devices of the system may be predominantly or exclusively used to set required signals (e.g. voltage levels) at their communication ports based on received control instructions. Thus, the function of said control devices may essentially be limited generating voltage signal/levels that are (e.g. remotely) commanded by the computer system. In other words, the control devices may mainly be used as voltage-setting hardware devices, without making use of their computing capabilities and in particular their logic and control capabilities e.g. in terms of control signal generation.

As a general matter, the control devices, which may be typical off-the-shelve device that are widely available, may be used without reconfigurations or adaptions. In particular, they may stay intact e.g. with regard to their basic features, such as security features or unit conversions. The possibility to use standard control devices increases flexibitly and limits costs of the disclosed solution.

The disclosed solution is in particular marked by the automation logic being implemented outside of the control devices, but in an (external) computer system instead, e.g. by way of the software applications discussed above. Preferably, no automation logic is performed by the control devices themselves or at least not as much as by the computer system.

Additionally or alternatively, the information available to the computer system may enable an abstraction of communication-specifics of the control devices e.g. from a point of view of the computer system's automation logic and in particular the software applications generating control instructions. In other words, these entities do not need to take communication specifics of the control devices into account, which is instead taken care of by other software components of the computer system, such as a so-called service layer or automation assemblage discussed below.

Generally speaking, the disclosed solution thus provides a functional separation between the tasks of generating control instructions and communicating them to the actual physical control devices and actuators connected thereto. This increases security, maintainability and robustness of the overall system.

The invention is specifically suited for usage in a private home, but not limited thereto. Specifically, the invention may be used in any (real-world physical) type of private environment, public environment, commercial environment, laboratory environment, production environment or other real-world physical environment. As an example, the invention could be used for controlling actuators in private homes, shops, shopping malls, hospitals, factories, theatres, cinemas, office areas or office buildings and so forth. Generally, the invention may be used for energy management in any of the environments and facilities mentioned herein.

In more detail, a system with the features of the attached claim 1 is disclosed. In particular, a system (e.g. a computer-implemented system and/or a system in form of a computer network) for controlling (spatially) distributed actuators is suggested. The system has a plurality of (e.g. physical and/or stand-alone) control devices that are each connected (e.g. in a signal and/or energy transmitting manner) to at least one actuator via at least one communication port of a respective control device.

The system further has a computer system (e.g. formed by at least one computing unit or a number of computing units forming a computer network) that is connected to each control device via at least one (e.g. wireless or wire bound) communication link, wherein at the least the following information are available to the computer system (in particular by being stored therein or by the computer system being configured to retrieve such information e.g. from databases):
- communication information enabling communicating with (and/or addressing the) control devices, e.g. by defining network addresses of the control devices and/or communication protocols according to which the control devices can be addressed;
- mapping information on (i.e. regarding) which communication port of each control device is connected to which actuator, e.g. by defining this relation in form of a table or database.

The computer system is further configured to:
- determine a control instruction (or, differently put, a control signal or control information) based on which at least one of the actuators can be controlled; and
- with help of the available information (i.e. the communication and mapping information), send the control instruction to at least one of the the control devices via the communication link and in particular to that control device to which the actuator to be controlled is connected. The control instruction preferably defines the control device's communication port to which said actuator is connected and preferably a voltage level can be said thereat.

The control device is further configured to set a signal (in particular a voltage level) at the respective communication port based on a received control instruction to thereby control the actuator in a manner defined by the control instruction.

Note that the computer system is preferably configured to generate respective control instructions for each of the actuators within the system and to send control instructions to each of the respectively associated control devices. Also, generation of the control instructions may be done in a regular and/or continuous manner, e.g. as outputs of an automation logic or control algorithm that preferably models or resembles an open or closed control loop. Automation logic as referred to herein may be realised as or by software component enabling respective logic operations and/or calculations for automation purposes (e.g. a ladder logic software component).

The computer system can comprise a central and e.g. single computer which may perform all control instruction generation and/or e.g. distribution operations (i.e., the computer system may be a central computer system). Yet, the computer system can also be a (e.g. spatially) distributed computer system (e.g. a computer network) which may comprise a number of different computing units, each of which preferably contributes to the control instruction generation (e.g. by at least partially generating some of the control instructions produced by the system). Especially in case of the distributed computer system, it is preferred that at least some of the computing units of said system share an automation context discussed herein.

The control devices may be physical control devices. In particular, they may be realised as stand-alone control devices that, theoretically, are configured to perform control actions and in particular to provide feedback control loops for controlling actuators connected thereto. Yet, as noted above, in the context of the disclosed solution, it is preferred that the control devices do not actually provide such functionalities (i.e. do not determine control actions, e.g. by way of feedback control loops).

Generally, a control device may be configured as a real-world computer unit, e.g. having a housing with a plurality of (input/output) communication ports. The latter may be used for connecting the control device to an end device (such as an actuator or sensor) and/or to a communication network (e.g. by being connected to a communication bus, data cable or the like). The communication ports are preferably physical and/or configured to enable a physical (i.e. hardware) communication connection, e.g. by said ports comprising sockets and/or connecting pins. Yet, at least some of the communication ports may also be configured to enable a wireless communication (e.g. by being or comprising respective wireless signal receiving and/or sending units). Note that communication ports may also be referred to as input and/or output ports herein. Aditionally or alternatively, at least some of the control devices may comprise at least one microprocessor and/or at least one data storage unit. There may also be control devices without data storage units.

A control device may generally be referred to as a physical control device. This takes account of the fact that the control devices interact with the physical environment (e.g. by means of end devices conneted thereto) and/or that the control device is a physical unit or entity connected to further physical units/entities (e.g. to end devices).

An end device and a physical control device may be connected to one another via a communication link, which may be wireless (e.g. via Wi-Fi connection, Bluetooth or the like) or may be wire bound (e.g. a cable). In a generally known manner, a user may choose end devices and physical control devices e.g. by buying them from different manufacturers and connect them to one another to configure a distributed control system. In the context of this disclosure, it is contemplated to then connect such a control system to the diclosed computer system.

In the context of this disclosure, an end device may be a device connected to the control device and intended to interact with the real-world environment. The end device may receive signals from a control device (e.g. in case of the end device being or comprising an actuator) and/or send signals to a control device (e.g. in case of the control device being or comprising a sensor).

A control instruction may be any signal/instruction that is configured to prompt an end device to behave in a desired manner and/or to assume a desired state (e.g. by changing the end device's operating parameters accordingly). A control action may be any action that is initiated based on a respective control instruction, such as an adaption of the operating parameters of an end device.

The communication information may be stored within the computer system, e.g. in form of or as part of a digital library or database of the system. They may cover a range of control devices of various types. Depending on the control devices present within the overall system, the associated communication information may then be selectively read out from e.g. the database. This results in the system generally being configured to interact with various control devices and a user merely having to identify those control devices present in a given system, without having to provide the communication information himself.

According to one example, the communication information may be part of control device drivers (see below). According to a further example, the communication information may be part of a software component enabling communication between the computer system and at least one control device, e.g. a control device communication bridge (in particular containing information on the communication protocol) and/or an end device property bridge (in particular containing information on the data/communication format) discussed below.

The mapping information, on the other hand, can be identified by a person setting up the system (e.g. by an electrician) and are typically bound to a specific system. Again, they may be stored as part of a digital library or database of the system.

Also, assignment information may be provided and/or stored (e.g. in the system or computer system) to define the assignment or differently put association between control devices and the AAUs discussed below and/or between end devices connected to the control devices and the AAUs. These information may define which control devices an AAU needs to address in order control the actuator for which the control instructions produced by said AAU are intended. The assignment information may be comprised by the mapping information and/or be provided by software components such as so-called antivirus digital trends. The letter may e.g. be set up automatically when defining relations between actuators/sensors, control devices and AAUs present within a given system.

A control instruction may relate to an operating parameter and/or state of an actuator and in particular to a desired operating parameter and/or desired state. In particular, it may define said operating parameter and/or state. Alternatively, it may define a different operating parameter of the actuator that is required to reach the desired operating parameter and/or desired state. The control instruction may generally define a control action to be performed by and/or applied to an actuator, the control action e.g. resulting from or defining a current distance to a desired operating state or operating parameter. The control instruction may be or include an analogue or digital signal (e.g. a digital data stream or digital dataset).

The computer system may use the communication information to address a control device in a suitable format and/or according to a suitable communication protocol. The computer system may use the mapping information to define the control device's communication port to which an actuator connected.

Contrary to a simple remote control of the control devices, the presently disclosed computer system is e.g. marked by including communication information and by determining control instructions independently of the control devices (and preferably also independently of the communication information). Rather, once the control instructions have been generated, they may be sent to the control devices with help of the communication information. This enables the above discussed functional separation and in particular that the control instructions can be determined without having to take specifics of the control devices into account, thereby limiting programming efforts. In other words, the computer system is marked by a level of abstraction between the control instruction generation and the communication with the control devices.

At least some of the control devices may be one of a PLC (programmable logic controller), a PAC (programmable automation controller), a computer, a RTU (remote terminal unit), an intelligent sensor (or smart sensor, such sensors being e.g. configured to process measurement signals before sending them to further units) or a remote I/O. Of course, control devices of different of the above types may be combined within one system.

According to a further embodiment of the disclosed solution, the control instructions are determined independently of the control devices. This may include the control instructions being generated within the computer system e.g. without referring to or interacting with the control devices and in particular without referring to or interacting with any computational and/or control capabilities thereof. Rather, control instruction generation may be completed by the computer system before sending a respective control instruction to one of the control devices.

Additionally or alternatively, at least during regular operation, it may be provided that the control devices do not generate any control instructions for the actuators. Regular operation may relate to any (e.g. continuous) operation during which no malfunctions, disturbances, errors or other abnormalities are present.

Again, advantages of the above variants are that due to decoupling the control instruction generation from the control devices, specifics thereof do not or only to a limited degree need to be taken into account, in particular when programming the control tasks.

According to a further aspect of the disclosed solution, the control devices are configured to set a signal at a communication port (in particular at the one defined by the control instruction), the signal being generated based on or correspoding to a received control instruction and preferably generated without altering a control action defined by the control instruction. The signal may e.g. be a voltage level (i.e. a continuous signal at the respective voltage level). The signal may be used to provide energy to the actuator, e.g. by operating it based on the provided voltage level.

According to one example, the signal is equivalent to the received control instruction and/or generated according to information included in the control instruction (e.g information defining the voltage level to be set). For generating the signal, the control device may e.g. operate internal relays or switches accordingly. However, it is preferred that the control device at most reads out such information, but does not alter any information included in the control instruction and in particular not those which define the control action and/or the desired operation of the connected actuator.

In a further aspect of the disclosed solution, the computer system comprises at least one of the following:
a) a software component defining an actuator-specific data specification, the software component being provided e.g. in form of an end device digital twin discussed below;
b) a software component enabling an actuator-specific data unification and/or actuator-specific data transformation, the software component being provided e.g. in form of an end device property bridge discussed below. The data transformation may e.g. include transforming a measured value (e.g. a voltage level) into the actual physical property to be measured (e.g. a temperature, pressure or the like). Likewise, the data transformation may e.g. include transforming a (desired) control or set value (e.g. a desired state parameter or operational parameter, such as ON/OFF, rpm or the like) into a value to be provided to an actuator in order to achieve/produce said state or operation (e.g. into a voltage level according to which the actuator should be operated);
c) a software component enabling communication between the computer system and at least one control device according to a control-device-specific communication protocol, the software component being provided e.g. in from of a control device communication bridge discussed below;
d) a software component which provides information usable for generating control instructions, the software component being provided e.g. in form of an automation context discussed below. Generally, this software component and the automation context in particular may act as a distribution channel to distribute and/or share information between entities connected thereto.

Regarding b), this software component may in particular be used for transferring data between a component according to a) and c) or between an AAU and a component according to c). Further, it may (e.g. outwardly) represent and/or output a value associated with a particular physical end device. Such a value may concern a specific control parameter or, differently put, a specific regulating variable and/or set value for the end device, such as a desired state parameter or operational parameter.

Component a) may be specific to certain types of end devices, in particular certain types of actuators. Component b) may be specific to a certain combination of a control device and the end device connected thereto.

Regarding c), this software component may provide and/or include at least part of the communication information and/or of the mapping information. It may be provided for a specific type of control device. It may represent and/or provide functions similar to the control device drivers discussed herein.

Regarding d), this software component may act as shared information pool or information database that is in particular accessible by a plurality of AAUs. The AAUs (but also other entities) may each read and/or write information from/to said software component.

According to a further embodiment of the disclosed solution, the system receives state signals relating to a state of an external environment (of the system) and wherein at least some of the control instructions are generated based on said state signals. The state may e.g. be a temperature, a level of humidity or a light intensity. In this context, at least one of the state signals may be generated by at least one sensor (e.g. comprised by the system) that is connected to a communication port of one of the control devices. This enables a more refined generation of control instructions by taking actual conditions in which the system operates into account.

Any device connected to a control device and interacting with the environment (and/or e.g. receiving signals from the control device) may be referred to as an end device. This includes in particular the actuators and sensors mentioned herein.

In a further aspect of the disclosed solution, the computer system may be configured to execute a plurality of software applications (also referred to as autonomous automation units AAU herein), at least some of the software applications being configured to generate control instructions for at least one of the actuators (AAUs not generating control instructions may e.g. provide/gather information for and/or carry out logic operations for other AAUs).These software applications may operate independently of the control devices to which the actuators are connected and may e.g. not to take specifics of these control devices into account. Rather, they may focus on the control task and on generating suitable control instructions for fulfilling their control task, wherein further software levels or software components of the computer system may then enable that said control instructions actually reach the actuators (e.g. by being communicated to the control devices in a suitable format).

The control instruction generated by such a software application may be similar to the control instruction output by the computer system to the control device or at least define a control action that is eventually output by the computer system. Yet, this does not exclude that control instructions generated by such a software application may be changed with respect to e.g. their data format within the computer system and before being output.

Note that at least some of the AAUs may exchange information with one another, e.g. by directly communicating with one another. Also, they may access the automation context mentioned above and read information therefrom and/or add information thereto. In case of a plurality of AAUs accessing the same automation context, this can be regarded as an indirect communication between the AAUs (i.e. indirectly via the automation context).

At least some of the above software components (AAUs) may be exchangeable (e.g. exchangeably stored within the system). For example, depending on a given system and in particular the actuators present therein, the software components (AAUs) needed for perfoming the control of said actuators can be downloaded, selected and/or activated. Overall, this increases flexibility of the system by being easy to configure and adjust to a given use case. Note that AAUs could also be created/written by end-users.

According to a further example of the disclosed solution, the system further comprises a human-machine-interface (HMI) by means of which settings of the software applications can at least indirectly be defined (e.g. altered or set). This may include conditions such as points of times or states in which certain operations of the actuators should take place (e.g. a point of time in which an AC unit should operate, a temperature threshold for the AC unit operation, signals to be received for opening a garage door or window blinds, a maximum level of precipitation up to which an irrigation system is to be activated etc.). The HMI may be provided by a computer, smartphone or laptop and in particular by their respective display and input units. The computer, smartphone or laptop may be used to operate and/or remotely access the computer system or form the computer system (see also following discussion).

The HMI provides an intuitive way of defining desired control actions, especially from an end user's perspective. Specifically, the end user may simply have to define e.g. one of desired set values, thresholds or conditions with respect to selected parameters but does not need to deal with an actual programming of the control devices (e.g. on a programming language level). Note that the latter may also apply to the AAUs which, as noted above, may focus on generating control instructions without taking specifics of the control devices into account. They may also be shielded from direct user access. Rather, a human machine interface may be provided for dealing with user inputs and transfer received inputs only indirectly to the AAUs e.g. via the automation context.

Generally, for defining settings and/or functions of a software application such as an AAU via the human machine interface, it is preferred that the user does not need to have detailed programming skills. Instead, each software application AAU may offer the user a range of conditions, parameters or other predefined control settings that a user can choose from and, preferably, that the user can combine (e.g.: no heating if cooling is activated). For doing so, it may be sufficient to perform simple drag-and-drop operations, speech inputs or the like. This may be referred to as programming a software application (e.g. AAU) by way of declaration.

An advantage of this programming principle is the user friendliness and that no expert knowledge is needed. Specifically, it is no longer needed to actually know the specifics of the control device to which the actuators are connected, such as preferred addressing or programming formats. Rather, from the user's perspective, he only has to interact with the AAUs and declare what functionalities are desired, without having to worry about how providing these functions is actually achieved on a programming or control level. Note that a user also does not need to know which actuators are connected to which control device. Rather, this can be taking account of by further information available to the computer system (see e.g. assignment information discussed below).

As a general aspect of the solution, actuators and/or automation tasks may be grouped according to a user's preferences and/or according to the environment that is to be controlled. For example, actuators, automation tasks and/or any of the software components/modules discussed herein that are associated with a certain room or area of a given environment can be grouped together and e.g. labelled accordingly (e.g. as living room actuators or the like). A grouping of any of the variants discussed herein may also be referred to as zoning or as defining zones to be controlled e.g. by respective actuators or automation tasks.

Accordingly, especially in the context of the method disclosed herein, at least one of the following measures may be provided, alone or in any combination:
- Zones may be defined e.g. by defining areas, such as rooms. This may be controllable as such and/or in their entirety by end user (e.g. by setting a temperature for the whole zone). This control may be performed by means of an HMI accessible by a user;
- The control devices and/or actuators contained in said zone may be identified (manually or automatically) and e.g. grouped together (e.g. by automatically each receiving a common label);
- The user may define desired states of the zone. E.g. by way of the diclosed computer system, it may then be determined which and how the actuators associated with said zone need to be operated in order to achieve the desired state.

Any of the above measures may be provided and/or performed by suitable software components, that are e.g. run on the disclosed computer system.

Coming back to the communication information, these may be provided by means of at least one control device driver (e.g. provided as a software component stored in and/or accessed by the computer system), wherein each control device driver is associated with a specific type of control device. As noted above, a number of different control device drivers may be prestored and then selected based on an actual system to be operated (i.e. based on the types of control devices present within the system). In particular, the system may comprise control devices of different types and control device drivers for each of these different types.

Accordign to a further variant of the disclosed solution, the system is used to operate actuators within a private home, an office environment, a public space, a production facility, a building or a commercial space. Further examples of where the system may be installed are discussed above and below.

At least one of the actuators may be or be part of one of the following:
- a heat pump;
- a heating system;
- a HVAC system;
- a lighting system;
- a door and/or window actuating system;
- a window blind actuating system;
- a gardening appliance;
- a household appliance;
- a photovoltaic system;
- a multimedia system;
- an energy management system;
- a home security system and/or surverillance system.

Also disclosed, but not independently claimed, is a computer system for being used in a system according to any of the previous claims. The computer system may be configured according to any examples and comprise any of the features discussed above and below.

For example, the computer system may be connectable to each control device of a system according to any of the above aspects (e.g. a system comprising a plurality of control devices that are each connected to at least one actuator by at least one communication port of a respective control device) via at least one communication link. Further, at the least the following information may be available to the computer system (in particular by being stored therein and/or by the computer system being configured to refer to external databases comprising such information):
- communication information enabling communicating with control devices;
- mapping information on which communication port of each control device is connected to which actuator.

Still further, the computer system is preferably configured to:
- determine a control instruction based on which at least one of the actuators can be controlled; and
- with help of the available information, send the control instruction to at least one of the the control devices via the communication link, the control instruction defining the control device's communication port to which said actuator is connected.

The invention also relates to a (e.g. computer-implemented) method for controlling distributed actuators as defined in claim 13, and wherein, inter alia, the actuators are each connected to one out of a plurality of control devices via at least one communication port of a respective control device and wherein the method comprises:
determining (e.g. computing), via a computer system that is connected to each control device via at least one communication link, a (e.g. digital) control instruction based on which at least one of the actuators can be controlled and wherein the control instruction defines the control device's communication port to which said actuator is connected; and
sending the control instruction (e.g. as a digital signal or a dataset) to the control device to which said at least one actuator is connected with help of at least the following information:
   - communication information enabling communicating with control devices;
   - mapping information on which communication port of each control device is connected to which actuator.

The method and computer system may comprise any features, aspects, variants and embodiments discussed herein. Specifically, any remarks on system-features equally apply to corresponding method-features. Also, the method may be carried out by means of a system as well as a computer system according to any embodiment discussed herein.

The invention will be further discussed based on the attached schematic figures. Similar features may be assigned the same reference signs throughout the figures.
- Fig. 1: is a schematic overview of a system according to an embodiment of the invention; and
- Fig. 2: is a functional diagram of a system similar to Fig. 1 for explaining a method according to an embodiment of the invention.

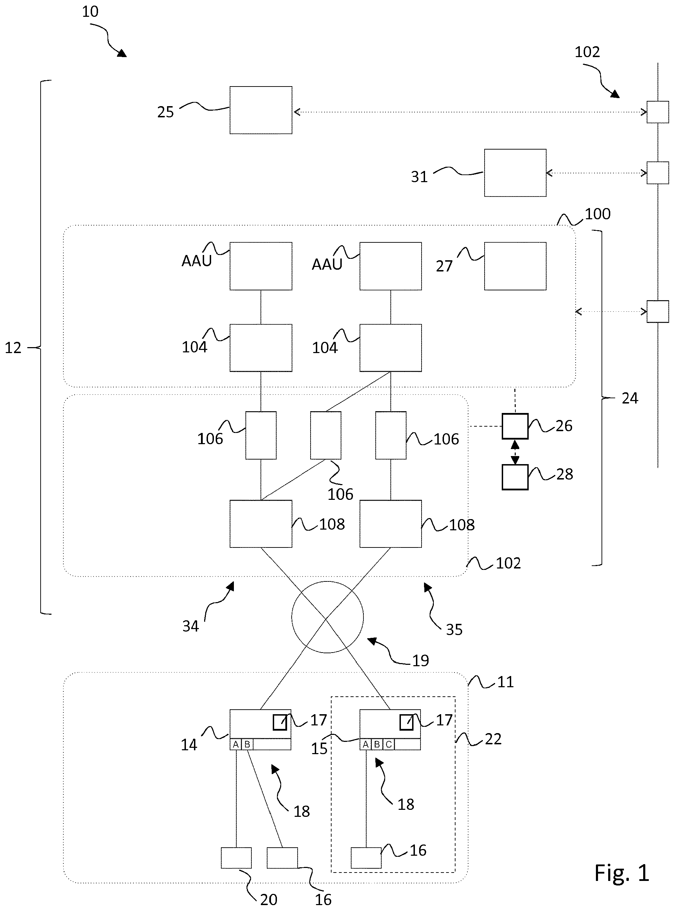

Fig. 1 is an overview of a system 10 according to an embodiment of the invention. The system 10 is installed in a schematically indicated private home 11 (i.e. in the physical world). It comprises a computer system 12 as well as a number of control devices 14, 15 that are distributed within the private home 11. Note that the computer system 12 can be a computer system as depicted (i.e. one single computer system 12 which performs all control instruction generation and e.g. distribution operations) but could also be a (e.g. spatially) distributed computer system 12 (e.g. a computer network) which e.g. comprises a number of different computing units (computers) 24, each of which preferably contributes to the control instruction generation (e.g. by at least partially generating some of the control instructions produced by the system 12). Especially in case of the distributed computer system, it is preferred if at least some of the computing units 24 of said system share an automation context 102 discussed herein.

As will be discussed in further detail below, each control device 14, 15 controls at least one actuator 16 and/or is connected to at least one sensor 20. Note that control devices 14, 15 to which only a sensor 20 is connected are also referred to as "control device" herein, although they lack an actuator 16 for performing actual control actions. This is because the sensor signals may (but must not necessarily) be used in the context of control actions. Still further, each control device 14, 15 is connected to the computer system 12 via a communication link 19.

The general working principle of the system 10 is that control instructions for the actuators 16 are generated by the computer system 12. No actual control instruction generation (i.e. no determination or computing of control instructions by way of dedicated programs, such as ladder logic programs) is carried out by means of the control devices 14, 15. Instead, the control devices 14, 15 merely pass on the remotely computed control instruction to the actuators 16 and/or based on an output of the computer system 12, the control devices 14, 15 set signals at an output port (communication port) 18 to which the actuator 16 is connected. Such a setting of (control) signals at a communication port 18 is e.g. relevant in case the control instruction defines an electric parameter, such as a voltage, that should be set at the respective output port 18 in order to e.g. drive an electric motor of the actuator 16. Such a voltage level may be equivalent to a signal being output by the control device 14, 15 based on the received control instruction.

Summarising the above, the computer system 12 thus generates control instructions that are configured to control the actuators 16 in a desired manner, preferably by being transferred to the actuators 16 via the control devices 14, 15 connected in between and/or by initiating that specific output signals are set at the communication ports 18 of the control devices 14, 15 based on which a desired control action is performed.

The communication link 19 may be provided by connecting each of the control devices 14,15 as well as the computer system 12 to a common communication bus. It would, however, also be possible to provide a wireless communication link 19, e.g. a WIFI connection or a communication via an online-cloud or internet server. Still further, mixed forms are possible in which the communication link 19 between the computer system 12 to some of the control devices 14, 15 is wire-bound (e.g. a communication bus) and the communication link 19 to some other of the control devices 14, 15 is wireless.

Each control device 14, 15 is configured as a PLC, but could also be configured as one of the further alternatives discussed above in the general part of the description. The left control device 14 in figure 1 is of a first type and e.g. produced by a first manufacturer (i.e. a first OEM, original equipment manufacturer), whereas the right control device 15 is of a second (different) type and e.g. produced by a second manufacturer.

Operating a system 10 with such a plurality of different types of control devices 14, 15 required a costly and extensive programming process so far. For example, this often required each control device 14, 15 to be individually programmed with help of OEM specific software tools using preferred programming languages. For doing so, professional programmers had to be hired. Moreover, in case the control devices 14, 15 should communicate with one another, this required them to be able to address each other and/or be addressed by a further computer system. Yet again, many known PLCs have manufacture-specific addressing formats, requiring experience to take account of these specifics and differences.

As shown below, such issues are overcome by means of the depicted system 10.

In more detail, each control device 14, 15 comprises a processing unit 17 in form of a standard microprocessor. According to known prior art solutions, said processing unit 17 could theoretically be used to execute a control program for controlling the actuator 16 connected to a respective control device 14, 15. For example, a ladder logic program could be defined according to which the control device 14, 15 generates control instructions for an actuator 16. Yet again, this would require taking account of the specifics of each control device 14, 15 (programming format, addressing etc.) which would require that a professional programmer sets up the system 10.

However, in the shown example and as a general aspect of the invention, the microprocessors 17 and the control devices 14, 15 in general do not calculate, process or generate any control instructions (e.g. do not execute programs for control instruction generation, such as ladder logic programs). Instead, they merely pass on control signals to the actuators 16, said signals being equivalent to and/or being ouput in accordance with control instructions generated by the computer system 12 (e.g. by setting outputs/signals at the communication ports 18 as a function of and/or resembling received control instructions).

Still further, in a generally known manner, the control devices 14, 15 each comprise a number of communication ports 18 which are combined input/output ports 18 (not each of which has a respective reference sign in figure 1). Such communication ports 18 may only be referred to as ports 18 herein. In a generally known manner and depending on a given control task, said ports 18 can be defined as either an input port 18 (for receiving signals) and/or as an output port 18 (for sending signals), wherein regardless of their configuration, any communication port 18 is assigned the same reference sign in this disclosure.

From left to right, the actuator 16 is connected to the second port 18 (output port B) of the left control device 14 in fig.1. To the first port 18, on the other hand, which is configured as an input port A, a sensor 20 is connected. The actuator 16 of the left control device 14 is a heat pump and the sensor 20 is a temperature sensor.

The actuator 16 of the right control device 15, on the other hand, is an AC-unit. Accordingly, said actuator 16 and control device 15 are part of an HVAC-system 22, even though no additional heating components are shown in the present example. The HVAC-system 22 could also comprise a temperature sensor at a respective output port 18 (not illustrated).

The system 10 enables that the computer system 12 generates control instructions for the AC actuator 16 based on any received input and especially based on any received temperature signals. Thus, the AC actuator 16 may be controlled based on signals produced by the temperature sensor 20 even though, due to being connected to the control device 14, said sensor 20 is physically associated with the heat pump actuator 16.

The communication link 19 is generally configured so that signals from units provided at an input port 18 can be sent to the computer system 12, whereas signals that are intended for the actuators 16 can be sent from the computer system 12 to the control devices 14, 15.

Referring now to the computer system 12, said system 12 comprises at least one computer 24 which is connected to the communication link 19. The computer 24 may be any household PC or smartphone or a computer unit that is controllable by a PC or smartphone, e.g. via a Wi-Fi connection. In one example, the computer 24 is a single-board computer such as known from the manufacturer Raspberry Pi.

From figure 1, the general working principle of the computer system 12 becomes evident. Note that the working principle discussed based on figure 1 is not mandatorily and could also be realised by means of an alternative software architecture.

For generating control instructions, the computer 24 comprises software applications AAU. Generally speaking, the software applications AAU serve to determine control actions whereas further software components discussed below help to translate said control actions into suitable instructions/signals that enable the actuators 16 to be operated as desired. Overall, the computer system 12 thus provides functions similar to the (physical) control devices 14, 15 in terms of control signal generation and/or logic computation. It may thus be considered as simulating and/or emulating real world control devices.

In more detail, the computer 24 comprises a processing unit in form of a microprocessor 26. The microprocessor 26 may run an operating system (e.g. the automation runtime 100 discussed below) which coordinates any of the functions and activities of the computer system 12 discussed herein. It also runs the automation assemblage 102 discussed below. Also, the computer 24 preferably comprises a storage unit 28. As indicated by respective arrows, the microprocessor 26 may access information stored within the storage unit 28 and may also write information thereto. Moreover, information may be loaded from said storage unit 28 into the microprocessor 26 to be processed thereby. In case these information comprise or are software modules, software applications or computer program products, the microprocessor 26 may process the program instructions included therein.

This way, numerous software applications AAU (Autonomous Automation Units) may be executed or, differently put, may be run by the microprocessor 26. Note that this may include numerous software applications AAU running in parallel to one another to simultaneously control the actuators 16 distributed within the private home 11.

In the shown example, the computer system 12 does not have a display or a direct input terminal. However, it is (remotely) controllable via a PC or smartphone which provide an HMI 25 for accessing the computer system 12. Specifically, with help of a wireless communication link (e.g. provided by the automation context 102 discussed below), functions of the computer system 12 may be accessed. As an example, a PC or smartphone may comprise a management software application for the computer system 12. Said software application may act as a human-machine-interface 25 and provide visualizations of states and functions of the overall system 10. This way, a user may be able to interact with and configure the software applications AAU discussed below and may generally get an overview of numerous functions and states of the system 10.

The software applications AAU may be downloaded by the computer 24 e.g. from an online platform such as an application store and are stored in the storage unit 28. This may be done by a user of the computer system 12 (i.e. an owner of the private home 11).

Also, this may be done during a first set up of the overall system 10 or in case said system 10 is to be expanded or maintained.

Note that instead of locally storing and/or running the software applications AAU and/or the further software components discussed below, the computer system 24 could also refer to online storage services or generally to external servers (e.g. in form of cloud computing). In this case, the external servers may also be regarded as forming part of the overall computer system 12.

Similarly, the software applications AAU and/or the further software components discussed below could be stored and run in a further (with respect to the computer system 12) external and/or spatially separated computer unit, such as a PC or smartphone. The control instructions could then be computed by means of said external computer unit and the computer 24 of Figure 1 could partly, predominantly or exclusively be used as a communication unit for (e.g. wirelessly) receiving such signals and forwarding them to the control devices 14, 15.

Each software application AAU is associated with a predetermined task. For example, each software application AAU may be configured to generate control instructions for at least one of the actuators 16 for satisfying its associated task.

Accordingly, each software application AAU serves to meet a specific need of the people living in the private home 11. For example, one software application AAU may be provided for heating, another software application AAU may be provided for managing HVAC-functions, another may be provided for garden management (e.g. by controlling non-depicted actuators 16 in form of a robotic lawn mower or an irrigation system), another may be provided for energy management (e.g. by controlling non-depicted actuators 16 in form of a solar energy power system) and another may be provided for light management (e.g. by controlling numerous non-depicted actuators 16 which control the light in different areas of the private home). Note that the software applications AAU may also be limited to certain areas or rooms of the private home and may control at least one function associated with such areas or rooms. For example, one software application AAU may be provided for controlling different functions within a living room (heating, lightning, entertainment systems), whereas another may be provided for controlling functions associated with the kitchen (heating, lightning, household appliances). This is further discussed in the general part of this description with reference to defining zones.

The software applications AAU are each accessible via the human machine interface discussed above. Specifically, each software application AAU may be associated with a graphic representation of its current state, parameters and/or functions. Moreover, each software application AAU may have settings that a user can choose. For example, a user may determine which functions should be activated and/or controlled by the AAU at which point of time and/or under which conditions.

For example, a heating software application AAU may be configured so that heating should only be activated below of a certain room temperature but, as an additional condition, only if the HVAC system does not provide any cooling. As indicated by respective arrows in figure 1 between the software applications AAU, the software applications AAU may communicate with one another for this purpose. In particular, they may exchange state information with one another, e.g. with regard to which actuators 16 they have presently activated and/or at which level these actuators 16 are operated. Thus, a heating software application AAU may send a request to a HVAC software application AAU to check whether the above mentioned exemplary condition is met.

Additionally or alternatively to communicating directly with one another, the AAUs could also refer to a common automation context 102. This would be similar to communicating indirectly with one another, due to both reading and writing information to the automation context 102 which may be shared among a number of AAU's.

The computer 24 further comprises a number of software components (or software modules), namely so-called end devices digital twins 104, end device property bridges 106 and control device communication bridges 108. Note that the number of each of said components depicted in Fig. 1 is only by way of example. Again, these may be stored in the storage unit 28 and executed by the microprocessor 26. As will be further discussed below, by way of these software components communication information are available to the computer 24 describing how the control devices 14, 15 and in particular the ports 18 to which they are connected can be addressed.

Generally speaking, the computer system 12 comprises control device drivers 34, 35 that may provide functions similar to and/or that may be realised as at least the control device communication bridges 108 (and/or the end device property bridges 106). The control device drivers 34, 35 can also be referred to as specialised AAUs that are e.g. intended to enable communication with the control devices 14, 15. Each control device driver 34, 35 is provided for one type of control device 14, 15 (i.e. said drivers 34, 35 are control-device-specific). They may provide the mapping and/or communication information discussed herein. They may generally act as communication interface for communication with and/or operating the control devices 14, 15 as desired.

Accordingly, each device driver 34, 35 is associated with a specific type of control device 14, 15 and, more exactly, the device driver 34 is associated with the control device 14 and the device driver 35 is associated with the control device 15. Generally speaking, the device drivers 34, 35 are thus configured to interact with and/or provide necessary information on a specific type of control device 14, 15, e.g. control devices 14, 15 produced by a certain manufacturer or control devices 14, 15 belonging to a certain product range. However, when as a generally preferred option also including the mapping information, the device drivers 34, 35 are adapted to act as (software) interfaces to the presently employed specific control devices 14, 15 of the system 10

Also, mapping information are thus available describing which output port 18 of a control device 14, 15 is connected to which actuator 16. The sum of all of these information provided by the above software components represents the overall mapping and communication information that are available to the computer system 12. Thus, results (i.e. control actions) computed by the computer system 12 can be forwarded to and operate the control devices 14, 15 (and in particular the actuators 16 connected thereto) as desired.

The mapping information may include information on which port 18 of a control device 14, 15 is connected to which end device 16, 20. They may also include information on port configurations. Specifically, the ports 18 of a control device 14, 15 which are connected to an actuator 16 or to a sensor 20 may be specified.

Similar to the software applications AAU, the above software components (and in particular control device drivers 34, 35) may be downloaded depending on a given configuration of the system 10. Additionally or alternatively, at least an initial set of software components (and in particular control device drivers 34, 35) may have been already installed prior to the first delivery of the computer system 12. Depending on the actual connections between the ports 18 of the control devices 14, 15 and the actuators 16 or sensors 20, the mapping information may then be added during actual setup, maintenance and/or expansion of the system 10. This may be done by an owner of the private home 11 or by an electrician who sets up the system 10. Again, however, this can be done by intuitively entering the respective connections with help of the human machine interface 25 discussed above and without requiring substantial experience or programming skills.

Thus, the downloaded or pre-installed software components (and in partifucal control device drivers 34, 35) can easily be adjusted depending on an actual configuration of a given system 10 by adding or updating the mapping information.

In the following, generating control instructions and forwarding them to the actuators 16 will be discussed. This is based on the assumption that at least the following software applications AAU exist: a heating software application AAU for controlling the heat pump actuators 16 connected to the left control device 14 in figure 1; an AC software application AAU for controlling the AC actuator 16 connected to the right control device 15 of the HVAC system 22 of figure 1.

As one exemplary condition, the heating software application AAU activates the heat pump actuators 16 so that it heats the private home as soon as a temperature measured by the temperature sensor 20 is below a predetermined threshold.

Regarding the AC software application AAU, one exemplary condition for activating the AC actuator 16 is that the AC actuator 16 should run between 10 am and 4 pm at a predetermined level.

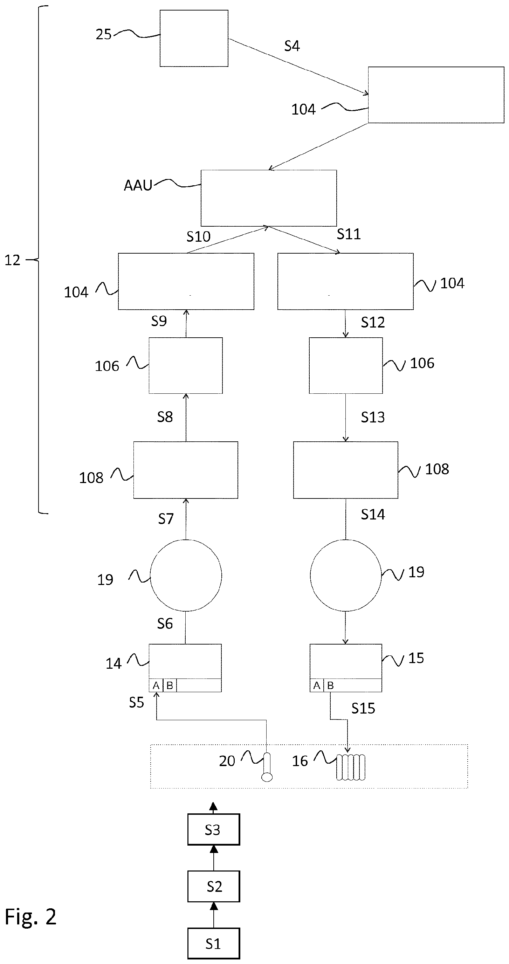

In order to not waste energy, the heating software application AAU comprises the further condition to not activate the heat pump actuator 16 when the AC actuator 16 is running. Also, e.g. based on the automation context 102 discussed with respect to figure 2 and/or by communicating with other AAUs, the heating software application AAU (but also generally any AAU) may access information needed to perform its control task or, more generally, needed to save energy. For example, the automation context 102 may include information on the weather and in particular an outside temperature. Such information may be provided by a specialized AAU 27 configured to accumulate such information e.g. from online services. Such AAU's which do not actually control actuators 16 but provide different functions may be referred to as virtual AAUs 27. Thus, the heating software application AAU may also access weather information and, as a further predefined condition, may only activate the heat pump actuator 16 if the outside temperature is e.g. below 16° C.

Additionally or alternatively, the heating software application AAU constantly receives and preferably actively demands temperature signals from the sensor 20. For doing so, the heating software application AAU refers to the the addressing and mapping information discussed above. A relation between an AAU and the sensors 20 as well as actuators 16 the AAU seeks to control (e.g. a relation between an AAU and which control device driver 34, 35 it should use), may be defined during a setup process and in particular during an initial setup by e.g. manually assigning an AAU to the respective end devices 16, 20 (e.g. by storing such assignment information in an AAU or generally within the computer system 12).

In sum, the heating software application AAU is thus able to send requests to a control device 14 via the communication link 19 which e.g. indicates that the specific input port 18 should be read to which the temperature sensor 20 is connected. The latter relation can be identified from the mapping information.

The heating software application AAU then runs a (feedback) control algorithm based on the temperature signal as well as a desired temperature (set temperature) to produce a control instruction. The control instruction defines a voltage which should be defined (i.e. output) at the specific output port 18 to which the heat pump actuator 16 is connected. In a generally known manner, setting output ports 18 to defined voltage levels can e.g. be achieved by means of relays of the control device 14, so that the control instruction can be configured so as to achieve a respective voltage setting. That is, the heating software application AAU may generate a control instruction that prompts the control device 14 to apply or set the respective voltage level at the output port 18 and thereby at the heating actuator 16 which will be controlled according to said voltage level. By means of the communication information, it is ensured that the relevant control instruction actually reaches the desired control device 14 to which the heat pump actuator 16 is connected in a suitable format. Note, however, that it is preferred that the control devices 14, 15 do not process, interpret or alter received control instructions or at least do not add any control information thereto, that would e.g. effect the eventually set or output voltage level.

Due to being a feedback control algorithm, the heating software application AAU frequently monitors the temperature signal provided by the temperature sensor 20 and adjusts its control instruction accordingly.

In the following, an exemplary software architecture of a computer system 12 will be discussed with special focus on the used software components. This software architecture is preferably, but not mandatorily, used for putting the general concept discussed above into practice. Any units, entities or modules discussed in the following may be realised as software applications, software modules or software components. It is to be understood, that some of the features discussed below, such as levels, are merely of explanatory character and may not necessarily relate to real world features of the computer system 12. Arrows and lines are generally used in figure 1 to indicate paths of information (i.e. data flows).

The software architecture may be implemented and/or executed by a computer system 12 according to any embodiment of the present invention.

As previously discussed, a plurality of AAUs is shown in figure 1. These can also be referred to as (software) agents. In general, an AAU may be configured to perform an automation task. Said automation task may be part of an overall automation task (e.g. a facility or home automation task) that is provided by a system 10 implementing the software architecture. Hence, an AAU's automation task may be referred to as a partial automation task (i.e. forming part of the systems's overall automation task). Also, said automation task may be referred to as being isolated since an AAU may generally be configured to perform the automation task on its own, although it may (preferably but not mandatorily) receive information for performing the task from other AAUs or from the automation context 102.

Generally put, an AAU may implement automation logic in order to generate control instructions. Yet, as has been discussed above this is advantageously done in the computer system 12 and thus independently of and/or outside of the actual physical control devices 14, 15.

The AAUs are depicted as being associated with a first level of the software architecture which represents a runtime environment (in the following called automation runtime 100). Said automation runtime 100 may e.g. be provided and/or executed by means of the microprocessor 26 of figure 1 or by means of a plurality of respective microprocessors 26 from a number of computers 24 comprised by the computer system 12 (i.e. in case the computer system 12 comprises a computer network).

In a generally known manner, the automation runtime 100 may be provided by or as an operating system and/or as an execution environment for software applications or software components (such as the AAUs). It may e.g. enable such software applications or software components to access system resources as well as to send or receive commands or instructions to other software components. As is typical for runtime environments, the automation runtime 100 enables software applications coded in a higher level programming language to actually function on a specific hardware system, such as the computer system 12, e.g. by enabling them to access system resources.

In sum, the automation runtime 100 acts as a software environment which again runs outside of the actual physical control devices 14, 15 (namely in the preferably spatially separated computer system 12). By way of the AAUs and the automation context 102 discussed below, automation logic is performed in said automation runtime 100 to produce control istructions for controlling the end devices 16, 20 connected to the control devices 14, 15.

The automation runtime 100 also comprises so-called end devices digital twins 104 discussed below.

The automation context 102 is preferably realised as a further software module. Any and preferably all AAUs (or the automation runtime 100 in general) may access the automation context 102. Specifically, any and preferably all AAUs may read from and/or provide information to the automation context 102. This may include status information of the sensors 20 and/or actuators 16 that are associated (e.g. controlled by) the respective AAUs. Also, any information that are e.g. specifically collected by certain AAUs (such as the AAU 27) independently of sensors 20 and/or actuators 16 may be provided to the automation context 102 (e.g. weather information which are gathered from online services).

The automation context 102 thus acts as an information collection or, differently put, knowledge database which a plurality of AAUs may access even in a parallel manner, in particular to perform their respective automation task. Providing such a multi-accessible automation context 102 may limit the need and/or extent of a direct communication between single AAUs (which, however, may still be possible). Note that the automation context 102 may, additionally or alternatively, also be configured to actively distribute information to at least some of the AAUs (e.g. in regular intervals and/or as soon as certain items of information are available).

Still further, the automation context 102 may act as a communication interface for receiving information from and/or providing information to further entities. For example, status information may be ouput and displayed to a user via the HMI 25 that is connected to the automation context 102. Yet, the HMI 25 may also provide configuration information and/or settings that are input by a user to the automation context 102. It is further indicated that the automation context 102 may also be connected to third party services and in particular online services, e.g. to access weather information or the like.

A communication and/or service level of the depicted software architecture is provided by the so-called automation assemblage 102 or, differently put, automation collection. Features of the levels 100 and 102 discussed herein may also be claimed independently of one another.

Again, the automation assemblage 102 runs outside of the physical control devices 14, 15 and on the computer system 12 instead (e.g. on at least one computing unit 24 or microprocessor 26). The automation assemblage 102 comprises preferably a plurality of software components enabling the AAUs to communicate with the physical control devices 14, 15 and in particular with the end devices 16, 20 connected thereto. The automation assemblage 102 thus acts as a software component (collection) enabling (e.g. managing and/or intermediating) communication between the AAUs and the real world. The automation assemblage 102 may provide functionalities such as forwarding control instructions to actually intended control devices 14,15 (i.e. communicating with correct control devices 14, 15) or data transformation (in particular by transforming data received from an AAU into preferred formats, e.g. formats preferred by the control devices 14, 15 or by the end devices 16, 20 connected thereto).

Aditionally or alternatively, the automation assemblage 102 may provide an abstraction layer or level, in particular with regard to the communication mentioned above. Note that this abstraction exists in particular from the AAUs' perspective, since it enables to control the end devices 16, 20 without knowledge of the exact addressing and mapping details of the involved control devices 14, 15. Rather, such information may be available to/via the automation assemblage 102.

The automation assemblage 102 may thus include (or provide) control device drivers 34, 35 i.e. functions that allow for operating the control devices 14, 15 according their specific requirements and preferences. The automation assemblage 102 can enable a communication with more than two different types control devices 14, 15 (e.g. at least five or at least ten or at least twenty) and thus also provide or represent more than two control device drivers 34, 35. As previously noted, the control drivers 34, 35 may comprise or be realised as the below-discussed bridges 106 and/or 108 of the automation assemblage 102.

As further indicated in figure 1, the automation assemblage 102 preferably comprises two types of software components (or software modules), namely so-called end device property bridges 106 and control device communication bridges 108. Note that the number of each of the components (including those of the automation runtime 100) depicted in Fig. 1 is only by way of example.

In brief, these software components of the automation assemblage 102 enable a communication (i.e. a data transfer and in particular a control instruction transfer) between the AAUs and the control devices 14, 15. Specifically, the AAUs may ouput control intructions based on perfoming control algortihms and/or logic operations, and these control instructions are then forwarded by the automation assemblage 102 in a suited (i.e., control-device specfic) format and/or according to a suited (i.e., control-device specfic) communication protocol to the control devices 14, 15.

The control device communication bridges 108 are software components that are configured to communicate with the real world physical control devices 14, 15 according to said devices' individual communication requirements. They thus act as a (software) communication interface of the computer system 12 to the real world as indicated by respective data transfer lines in figure 1. Each control device communication bridge 108 may be provided for one specific type of control device 14, 15. The control device communication bridges 108 provide and/or include at least part of the communication information previously discussed. They may also provide and/or include the mapping information. Specifically, in the shown example, the control device communication bridges 108 provide and/or include information on the communication protocol, whereas the end device property bridges 106 include information on the data format required by the end devices 16, 20 connected to the control devices 14, 15 and in particular on a data transformation, e.g. from measured voltage levels into values of actually measured physical properties or from desired states/operations into voltage levels required for achieving them. In the shown example, the communication information are made up at least of these two types of information (communication protocol and data format).
The data transfer to the control devices 14, 15 is enabled by the communication link 19 to which the control device communication bridges 108 are connected.

Since the control device communication bridges 108 take over the task of communicating in accordance with communication protocols of the control devices 14, 15, the further (software) components of the computer system 12 do not need to take such communication protocols into account. In other words, these further components are shielded from such specific communication protocols and may operate independently thereof. This limits programming efforts and increases flexibility of the computer system 12: In case new control devices 14 ,15 with new communication protocols are to be integrated, only the control device communication bridges 108 need to be updated accordingly but e.g. not necessarily the AAUs.

The end device property bridges 106 are software components that provide data format unifications and/or data transformations when exchanged between AAUs and control device communication bridges 108. For example, they may transform (or differently put convert) voltage levels supplied by a sensor 20 into an actual value of a parameter measured by said sensor 20 (e.g. a temperature value). This converted value may then be used by an AAU e.g. as a feedback control parameter. Similarly, the end device property bridges 106 may transform (i.e. convert) regulating variables and/or set values and/or control signals output by an AAU and that e.g. define a desired state or operation of an actuator 16 into voltage levels that are to be set at and/or be provided to the actuators 16 e.g. for achieving said states/operation.

Differently put, one specific end device property bridge 106 component outwardly represents and/or outputs a value associated with a particular physical end device (sensor 20 or actuator 16). Such a value may concern a specific control parameter or, differently put, a specific regulating variable and/or set value for an end device 16, 20, e.g. a voltage level that is applied to an actuator 16 via a port 18 connected thereto. Alternatively, in case of the end device being a sensor 20, it may concern a value determined or measured by said sensor 20.

For example, an end device property bridge 106 may concern and/or represent one of the following parameters and/or define voltage levels to achieve desired values of said parameters, such as a (measured) temperature, an angle and/or time of rotation of a valve actuator, a (measured) intensity of the light, the height and the rotation of blinds (e.g. in case of a blind actuator), a (measured) water level, a failure or error indication etc.

The (as such optional) end device digital twins 104 are software components that each provide a data specification for one particular AAU that utilises one or more end device property bridges 106 to send or receive control instructions to the real world physical control devices 14, 15. The data specification may stem from and/or be defined by the control devices 14, 15 to which the actuators 20 are connected that a specific AAU intends to operate with its control instructions.

By way of the end device property bridges 106 and end device digital twins 104 components are created to increase the abstraction level when communicating between AAUs and control device communication bridges 108 (e.g. from the AAUs' perspective).

With reference to Fig. 2, an exemplary method according to an embodiment of the invention and performed by the computer system 12 of Figure 1 will be discussed in a step-by-step manner and with respect to one AAU (heating AAU) performing one control task (temperature control). Of course, the below remarks apply to any AAU comprised by the computer system 12. Note that the description is not limited to the exact configuration of the computer system 12 in figure 1. Nonetheless, figure 2 shows components similar to those of figure 1 and also uses the same reference signs. Yet, not all of the components of figure 1 are included in figure 2 and are also not mandatory for performing the method of figure 2. Generally, figure 2 is a mixture of a flow diagram by marking single method steps and of a functional diagram by including e.g. the hardware and software components associated with or performing said steps.

In an initial step S1, which may be carried out during a set up of the overall system 10, the automation tasks to be performed by the system are determined. Following that, suitable AAUs for performing each of the control tasks are selected and/or activated. This may include downloading the AAUs from an online application store. In the shown example, the control task is a heating task and the AAU is a heating AAU.

Similarly, in an optional step S2, it may be checked which control devices 14, 15 are present in the system and associated control drivers 34, 35 and/or an associated automation assemblage 102 (or automation assemblage components) are selected and/or activated. This may again include downloads from an online application store.

In step S3, a person setting up the system (e.g. an electrician) defines (at least indirectly) which control devices 14, 15 each AAU must address (and/or be addressed by) to perform its control tasks. By accessing the respective software components of the computer system 12 (e.g. by a human-machine interface 25 discussed above), information (herein also referred to as assignment information) may be provided and/or stored to define the association between control devices 14, 15 and each AAU and/or between the end devices 14, 20 connected to the control devices 14, 15 and each AAU. Note that the assignment is typically defined by which sensors and actuators 20, 16 are connected to which control devices 14, 15 (e.g. an AAU for HVAC control will have to access the AC unit 16 of Figure 1, thus being associated with the control device 15). This may be manually determined by the person setting up the system.

One way of achieving the above assignment is to create the end device digital twins 104 (e.g. automatically and in particular in response to identifying the above relations) and assign them to a respective AAU. As noted above, said end device digital twins 104 have properties which are bound to the end devices (i.e. the actuators/sensors 16, 20) via the end device property bridges 106 and the control device communication bridges 108. They may also include assignment information on which of the bridges 106, 108 need to be addressed so that a certain end device 16, 20 can be accessed and/or operated by a certain AAU. The AAUs then communicate with end device digital twins 104 and their properties (i.e. contained information), but preferably not with the bridges 106, 108 directly.

Yet, it may also be possible that any of the data flows and communication connections e.g. depicted between the various components in figure 1 can be manually defined (e.g. manually program) by way of the HMI 24 and e.g. when setting up the computer system 12. The computer system 12 may also include a program that, upon e.g. receiving a table including the relevant assignment information, defines the communication connections between the various components of figure 1 automatically (e.g. by setting respective communication variables within said components accordingly).

As a result, each AAU may include and/or may access respective assignment information (e.g. when stored as part of the automation context 102 or within the end device digital twins 104) discussed above. It may thus (at least indirectly) address the correct control drivers 34, 35 and/or components of the automation assemblage 102, respectively.

Note that with respect to sensor signals, these may be stored in the automation context 102 as well, preferably after having been processed by any of the control drivers 34, 35 and/or automation assemblage components. This is indicated by a respective arrow between the automation runtime 100 and the automation context 102 in Fig. 1. In an opposite manner compared to control instructions originating from the AAUs and being sent out of the computer system 12, a sensor signal may be received by a control device communication bridge 108 from a control device 14, 15 to which the respective sensor 20 is connected. The control device communication bridge 108 may, at least indirectly, forward the sensor signal to at least one of the AAUs and/or to the automation context 102. This will be discussed in further detail below.

In step S4 (see top of figure 2), which just like the subsequent steps relates to a phase of continuous operation and not only set up of the system 10, a user defines a desired temperature in a given zone or room of a private home 11 of e.g. 24°C. For doing so, he can use the HMI 25 which forwards the respective information to the automation context 102 and from there to the heating AAU shown in figure 2.

The AAU performs a feedback control of the zone/room temperature and uses the desired temperature provided by the user as a set value. In order to adjust the room temperature to the desired set value, a temperature signal output by a temperature sensor 20 connected to a first control device 14 is considered. For example, the temperature sensor 20 may determine that the zone/room currently has a temperature of 21 °C.

According to the sensor's configuration, this temperature translates into a certain voltage level output by the sensor 20 to the port 18 of control device 14 to which it is connected. In step S6, the control device 14 transfers the received voltage level (i.e. the respective input value) to the computer system 12. For doing so, it uses a communication link 19, e.g. in form of a Wi-Fi connection. According to its specification, it may encode the event of having received said input value in a predefined manner and output this is a message. For example, it may use a so-called BCD code (binary code decimal) to translate the measured voltage level accordingly and output the message "Got 0001,0100 on port A", wherein port A is the port 18 to which the temperature sensor 20 is connected.

In step S7, the control device communication bridge 108 assigned to the control device 14 receives this message. Since the control device communication bridge 108 comprises information on the preferred communication protocol of the control device 14, it can interpret the message accordingly and even decode the BCD code to receive the actually measured voltage level. Also, the control device communication bridge 108 comprises the mapping information so that it knows which end devices 16, 20 are connected to which port 18 of the end device 14, i.e. that the (decoded) voltage level was measured by the temperature sensor 20 connected to the relevant port A.

In step S8, the measured voltage level is then forwarded to the end device property bridge 106 that reflects properties of the temperature sensor 20, i.e. of that end device 16, 20 connected to the control device 14 to which the control device communication bridge 108 is assigned as well. The end device property bridge 106 concerns the "temperature measurement" - property of the temperature sensor 20. It is thus configured to associate and convert a measured voltage level with/into an actually present temperature e.g. in the unit degree Celsius. Accordingly, it converts the measured voltage level of 1.6 V back to the measured temperature of 21 °C.

The digital twin 104 of the temperature sensor 20 then forwards this converted temperature value to the heating AAU in step S9.

Based on this measured current temperature and the set value of the temperature and in particular based on the difference therebetween (24°C - 21°C = 3°C), the heating AAU then executes a control algorithm (e.g. a ladder logic program) to determine a suitable control action and/or control instruction to achieve the set value.

Note that for doing so, the heating AAU may also access the further information, such as wheather information. In case these e.g. indicate low outside temperatures or a lack of sunshine during a certain upcoming time period (e.g. within the next half hour), the extent of required heating to achieve the set value may be adjusted (i.e. increased) accordingly.

In the shown example, a heating actuator 16 is provided that is connected to a second control device 15. Said heating actuator 16 may be controlled in a simple on-off-manner discussed in the following but could also be controlled by setting different heating levels of e.g. 0 to 5.

The AAU presently determines that the heating actuator 16 should be switched on to reach the desired set value. This information is passed on to the end device digital twin 104 of the heating actuator 20 in step S11. The end device digital twin 104 passes this information to the appropriate (i.e. assigned) end device property bridge 106 associated with the heating actuator 20 in step S12. This end device property bridge 106 converts this information into an appropriate voltage level that should be set at the port 18 of the second control device 15 to which the heating actuator 20 is connected. For example, in order to switch the heating actuator 21 on, a voltage level of 24 V may have to be output, this information being provided by the bridge 106.

In step S13, this information (voltage level) is transferred to the control device communication bridge 108 associated with the second control device 15. Said control device communication bridge 108 comprises the mapping information and knows that the heater 16 is connected to a certain port 18 (herein called port B) of the second control device 15. Also, it comprises information on the communication protocol required for communicating with the second control device 15. Accordingly, it generates a message to be transferred to the control device 15 with the voltage level identified above. Again, the second control device 15 uses a BCD code so that the message for setting the desired voltage level at port B corresponds to "Set 0010 0100 at port B".

Via the communication link 19 (e.g. via Ethernet), this is forwarded to the second control device 15 in step S14. The control device 15 decodes/analyses this message and sets the voltage level at port B to 24 V (step S15). Thus, the heating actuator 20 is activated and starts heating.

Note that none of the above options include control logic operations by the control devices 14, 15, but may include standard safety logic operations. Similarly, they do not include any processing of the control instructions by the control devices 14, 15 with regard to defining or altering the control actions defined by the AAUs.

Rather, the control devices' operation is limited to setting or pasing voltage levels at/to desired output ports 18 (except for an optional safety logic mentioned above). Which levels are to be set at which ports 18 is thus preferably not ascertained by the control devices 14, 15 themselves, but by the externally generated control instructions (i.e. generated within the computer system 12).

In summary, the control devices 14, 15 do not calculate voltage levels (i.e. control/output signals) for their ports 18 themselves, but receive such information from external sources (i.e. at least indirectly from the AAUs). The control devices 14, 15 therefore do not include, model or provide any control loops. The control devices 14, 15 also do not analyse and/or process any sensor signals, at least not with respect to generating control instructions. Rather, the control devices' 14, 15 function may be limited to setting or passing voltage levels at/to output ports 18 based on the received control instructions.

As noted above, this is advantageous in terms of limiting programming efforts and increasing flexibility of the system 10, since individual programming languages, programming tools and communication protocols or of the control devices 14, 15 do not necessarily need to be taken account by a person setting up or using the system 10, but are dealt with internally and preferably automatically by the computer system 12.

## Claims

1. System (10) for controlling distributed actuators (16), with:
a plurality of control devices (14, 15) that are each connected to at least one actuator (16) via at least one communication port (18) of a respective control device (14, 15); and
a computer system (12) that is connected to each control device (14, 15) via at least one communication link (19), wherein at least the following information is available to the computer system (12):
- communication information enabling communicating with the control devices (14, 15);
- mapping information on which communication port (18) of each control device (14, 15) is connected to which actuator (16);
and **characterized by** the computer system (12) further being configured to:
- determine a control instruction based on which at least one of the actuators (16) can be controlled,
- by means of a software component (106) comprised by the computer system (12), perform an actuator-specific data transformation by transforming a desired set value defined by the control instruction, the set value being a desired state parameter or operational parameter of the at least one actuator (16), into a voltage level required for achieving said state or operation, wherein the voltage level is to be set at the control device's communication port (18) to which said actuator (16) is connected; and
- with help of the communication information and mapping information, send the control instruction comprising the voltage level to at least one of the control devices (14, 15) via the communication link (19), the control instruction defining the control device's communication port (18) to which said actuator (16) is connected and defining the voltage level to be set thereat by the at least one control device (14, 15) receiving the control instruction, wherein the control device (14, 15) does not alter the voltage level defined by the control instruction received from the computer system (12) when setting the voltage level to the communication port (18).

2. System (10) according to claim 1,
wherein at least some of the control devices (14, 15) are one of a PLC, a PAC, a computer, a RTU, an intelligent sensor or a remote I/O.

3. System (10) according to claim 1 or 2,
wherein the control instruction is determined independently of the control devices (14, 15) and/or wherein at least during regular operation, the control devices (14, 15) do not generate control instructions for the actuators (16).

4. System (10) according to any previous claim,
wherein the computer system (12) comprises at least one of the following:
- a software component (104) defining an actuator-specific data specification;
- a software component (108) enabling communication between the computer system (12) and at least one control device (14, 15) according to a control-device-specific communication protocol;
- a software component (102) which provides information usable for generating control instructions and/or which provides the mapping information.

5. System (10) according to any of the previous claims,
wherein the system (10) is adapted to receive state signals relating to a state of an external environment and wherein at least some of the control instructions are generated based on said state signals.

6. System (10) according claim 5,
wherein at least one of the state signals is generated by at least one sensor (20) that is connected to a communication port (18) of one of the control devices (14, 15).

7. System (10) according to any of the previous claim,
wherein the computer system (12) is configured to execute a plurality of software applications (AAU), at least some of the software applications (AAU) being configured to generate control instructions for at least one of the actuators (16).

8. System (10) according to claim 7,
further comprising a human-machine-interface by means of which settings of the software applications (AAU) can at least indirectly be defined.

9. System (10) according to any previous claim,
wherein the communication information are provided by at least one control device driver (34, 35), wherein each control device driver (34, 35) is associated with a specific type of control device.

10. System (10) according to claim 9,
wherein the system comprises control devices of different types and control device drivers (34, 35) for each of these different types.

11. System (10) according to any previous claim,
wherein the system (10) is used to operate actuators (16) within a private home, an office environment, a public space, a production facility, a building or a commercial space.

12. System (10) according to any previous claim,
wherein at least one of the actuators (16) is or is part of one of the following:
- a heat pump;
- a heating system;
- a HVAC system;
- a lighting system;
- a door actuating system;
- a window actuating system;
- a window blind actuating system;
- a gardening appliance;
- a household appliance;
- a photovoltaic system;
- a multimedia system;
- an energy management system;
- a home security system and/or surverillance system.

13. Method for controlling distributed actuators (16),
wherein the actuators (16) are each connected to one out of a plurality of control devices (14, 15) via at least one communication port (18) of a respective control device (14, 15) and the method comprises:
determining, via a computer system (12) that is connected to each control device (14, 15) via at least one communication link (19), a control instruction based on which at least one of the actuators (16) can be controlled;
the method being **characterized by** further comprising:
perfoming, by means of a software component (106) comprised by the computer system (12), an actuator-specific data transformation by transforming a desired set value defined by the control instruction, the set value being a desired state parameter or operational parameter of the at least one actuator (16), into a voltage level required for achieving said state or operation, wherein the voltage level is to be set at the control device's communication port (18) to which said actuator (16) is connected, so that the control instruction defines the control device's communication port (18) to which said actuator (16) is connected as well as the voltage level to be set thereat; and
sending the control instruction to the control device (14, 15) to which said at least one actuator (16) is connected with help of at least the following information:
- communication information enabling communicating with control devices (14, 15);
- mapping information on which communication port (18) of each control device (14, 15) is connected to which actuator (16); and
setting by the at least one control device (14, 15) receiving the control instruction the voltage level to the communication port (18) without altering the voltage level defined by the control instruction received from the computer system (12).

## Patentansprüche

1. System (10) zum Steuern von verteilten Aktoren (16) mit:
mehreren Steuervorrichtungen (14, 15), die jeweils mit mindestens einem Aktor (16) über mindestens einen Kommunikationsanschluss (18) einer jeweiligen Steuervorrichtung (14, 15) verbunden sind; und
einem Computersystem (12), das mit jeder Steuervorrichtung (14, 15) über mindestens eine Kommunikationsverbindung (19) verbunden ist, wobei dem Computersystem (12) zumindest die folgenden Informationen zur Verfügung stehen:
- Kommunikationsinformationen, die das Kommunizieren mit den Steuervorrichtungen (14, 15) ermöglichen;
- Zuordnungsinformationen darüber, welcher Kommunikationsanschluss (18) jeder Steuerungsvorrichtung (14, 15) mit welchem Aktor (16) verbunden ist;
und **dadurch gekennzeichnet, dass** das Computersystem (12) ferner konfiguriert ist:
- eine Steueranweisung zu bestimmen, auf deren Grundlage mindestens einer der Aktoren (16) gesteuert werden kann,
- mittels einer Softwarekomponente (106), die in dem Computersystem (12) enthalten ist, eine aktorspezifische Datentransformation durchzuführen durch das Transformieren eines gewünschten Sollwerts, der durch die Steueranweisung definiert wird, wobei der Sollwert ein gewünschter Zustandsparameter oder Betriebsparameter des mindestens einen Aktors (16) ist, auf ein Spannungsniveau, das zum Erreichen des Zustands oder Betriebs erforderlich ist, wobei das Spannungsniveau an dem Kommunikationsanschluss (18) der Steuervorrichtung, mit dem der Aktor (16) verbunden ist, eingestellt werden soll; und
- mit Hilfe der Zuordnungsinformationen und der Abbildungsinformationen die Steueranweisung, die das Spannungsniveau umfasst, über die Kommunikationsverbindung (19) zu mindestens einer der Steuervorrichtungen (14, 15) zu senden, wobei die Steueranweisung den Kommunikationsanschluss (18) der Steuervorrichtung, mit dem der Aktor (16) verbunden ist, definiert und das Spannungsniveau definiert, das daran durch die mindestens eine Steuervorrichtung (14, 15), die die Steueranweisung empfängt, eingestellt werden soll, wobei die Steuervorrichtung (14, 15) das Spannungsniveau, das durch die Steueranweisung, die von dem Computersystem (12) empfangen worden ist, definiert wird, nicht verändert, wenn sie das Spannungsniveau an dem Kommunikationsanschluss (18) einstellt.

2. System (10) nach Anspruch 1,
wobei mindestens einige der Steuervorrichtungen (14, 15) eines aus einer PLC, einer PAC, einem Computer, einer RTU, einem intelligenten Sensor oder einem entfernten E/A sind.

3. System (10) nach Anspruch 1 oder 2,
wobei die Steueranweisung unabhängig von den Steuervorrichtungen (14, 15) bestimmt wird, und/oder wobei zumindest während des Normalbetriebs die Steuervorrichtungen (14, 15) keine Steueranweisungen für die Aktoren (16) erzeugen.

4. System (10) nach einem der vorhergehenden Ansprüche,
wobei das Computersystem (12) zumindest eine der folgenden Komponenten umfasst:
- eine Softwarekomponente (104), die eine aktorspezifische Datenspezifikation definiert;
- eine Softwarekomponente (108), die eine Kommunikation zwischen dem Computersystem (12) und mindestens einer Steuervorrichtung (14, 15) gemäß einem steuervorrichtungsspezifischen Kommunikationsprotokoll ermöglicht;
- eine Softwarekomponente (102), die Informationen bereitstellt, die verwendet werden können, um Steueranweisungen zu erzeugen, und/oder die die Abbildungsinformationen bereitstellt.

5. System (10) nach einem der vorhergehenden Ansprüche,
wobei das System (10) dafür ausgelegt ist, Zustandssignale bezüglich eines Zustands einer äußeren Umgebung zu empfangen, und wobei zumindest einige der Steueranweisungen basierend auf den Zustandssignalen erzeugt werden.

6. System (10) nach Anspruch 5,
wobei mindestens eines der Zustandssignale durch mindestens einen Sensor (20) erzeugt wird, der mit einem Kommunikationsanschluss (18) einer der Steuervorrichtungen (14, 15) verbunden ist.

7. System (10) nach einem der vorhergehenden Ansprüche,
wobei das Computersystem (12) konfiguriert ist, mehrere Softwareanwendungen (AAU) auszuführen, wobei zumindest einige der Softwareanwendungen (AAU) konfiguriert sind, Steueranweisungen für mindestens einen der Aktoren (16) zu erzeugen.

8. System (10) nach Anspruch 7,
das ferner eine Mensch-Maschine-Schnittstelle umfasst, mittels derer Einstellungen der Softwareanwendungen (AAU) zumindest indirekt definiert werden können.

9. System (10) nach einem der vorhergehenden Ansprüche,
wobei die Kommunikationsinformationen durch mindestens einen Steuervorrichtungstreiber (34, 35) bereitgestellt werden, wobei jeder Steuervorrichtungstreiber (34, 35) einem spezifischen Typ von Steuervorrichtung zugeordnet ist.

10. Steuervorrichtung (10) nach Anspruch 9,
wobei das System Steuervorrichtungen verschiedener Typen und Steuervorrichtungstreiber (34, 35) für jeden dieser verschiedenen Typen umfasst.

11. System (10) nach einem der vorhergehenden Ansprüche,
wobei das System (10) verwendet wird, um Aktoren (16) in einem Eigenheim, einer Büroumgebung, einem öffentlichen Raum, einer Produktionsstätte, einem Gebäude oder einer Gewerbefläche zu betreiben.

12. System (10) nach einem der vorhergehenden Ansprüche,
wobei mindestens einer der Aktoren (16) eines der folgenden Systeme oder ein Teil eines der folgenden Systeme ist:
- eine Wärmepumpe;
- ein Heizungssystem;
- ein HVAC-System;
- ein Beleuchtungssystem;
- ein Türbetätigungssystem;
- ein Fensterbetätigungssystem;
- ein Jalousiebetätigungssystem;
- Gartengerät;
- Haushaltsgerät;
- ein Photovoltaiksystem;
- ein Multimediasystem;
- ein Energieverwaltungssystem;
- ein Heimsicherheitssystem und/oder ein Überwachungssystem.

13. Verfahren zum Steuern verteilter Aktoren (16),
wobei die Aktoren (16) jeweils mit einer aus mehreren Steuervorrichtungen (14, 15) über mindestens einen Kommunikationsanschluss (18) einer jeweiligen Steuervorrichtung (14, 15) verbunden sind, und das Verfahren Folgendes umfasst:
Bestimmen, über ein Computersystem (12), das mit jeder Steuervorrichtung (14, 15) über mindestens eine Kommunikationsverbindung (19) verbunden ist, einer Steueranweisung auf deren Grundlage mindestens einer der Aktoren (16) gesteuert werden kann;
wobei das Verfahren **dadurch gekennzeichnet ist, dass** es Folgendes umfasst:
Durchführen mittels einer Softwarekomponente (106), die in dem Computersystem (12) enthalten ist, einer aktorspezifischen Datentransformation durch Transformieren eines gewünschten Sollwerts, der durch die Steueranweisung definiert wird, wobei der Sollwert ein gewünschter Zustandsparameter oder Betriebsparameter des mindestens einen Aktors (16) ist, auf ein Spannungsniveau, das zum Erreichen des Zustands oder Betriebs erforderlich ist, wobei das Spannungsniveau an dem Kommunikationsanschluss (18) der Steuerungsvorrichtung, mit dem der Aktor (16) verbunden ist, eingestellt werden soll, so dass die Steueranweisung den Kommunikationsanschluss (18) der Steuerungsvorrichtung, mit dem der Aktor (16) verbunden ist, sowie das Spannungsniveau, das daran eingestellt werden soll, definiert; und
Senden der Steueranweisung zu der Steuervorrichtung (14, 15), mit der der zumindest eine Aktor (16) verbunden ist, mit Hilfe zumindest der folgenden Informationen:
- Kommunikationsinformationen, die das Kommunizieren mit den Steuervorrichtungen (14, 15) ermöglicht;
- Zuordnungsinformationen darüber, welcher Kommunikationsanschluss (18) jeder Steuerungsvorrichtung (14, 15) mit welchem Aktor (16) verbunden ist; und
Einstellen durch die mindestens eine Steuervorrichtung (14, 15), die die Steueranweisung empfängt, des Spannungsniveaus an dem Kommunikationsanschluss (18), ohne das Spannungsniveau zu verändern, das durch die Steuerungsanweisung, die von dem Computersystem (12) empfangen worden ist, definiert wird.

## Revendications

1. Système (10) pour commander des actionneurs distribués (16), avec :
une pluralité de dispositifs de commande (14, 15) qui sont chacun connectés à au moins un actionneur (16) par l'intermédiaire d'au moins un port de communication (18) d'un dispositif de commande respectif (14, 15) ; et
un système informatique (12) qui est connecté à chaque dispositif de commande (14, 15) par l'intermédiaire d'au moins une liaison de communication (19), au moins les informations suivantes étant disponibles pour le système informatique (12) :
- des informations de communication permettant de communiquer avec les dispositifs de commande (14, 15) ;
- des informations de mappage indiquant quel port de communication (18) de chaque dispositif de commande (14, 15) est connecté à quel actionneur (16) ;
et **caractérisé en ce que** le système informatique (12) est en outre configuré pour :
- déterminer une instruction de commande sur la base de laquelle au moins un des actionneurs (16) peut être commandé,
- au moyen d'un composant logiciel (106) compris dans le système informatique (12), effectuer une transformation de données spécifique à un actionneur en transformant une valeur de consigne souhaitée définie par l'instruction de commande, la valeur de consigne étant un paramètre d'état ou un paramètre opérationnel souhaité de l'au moins un actionneur (16), en un niveau de tension requis pour atteindre ledit état ou fonctionnement, le niveau de tension devant être réglé au niveau du port de communication (18) des dispositifs de commande auquel ledit actionneur (16) est connecté ; et
- à l'aide des informations de communication et des informations de mappage, envoyer l'instruction de commande comprenant le niveau de tension à au moins l'un des dispositifs de commande (14, 15) par l'intermédiaire de la liaison de communication (19), l'instruction de commande définissant le port de communication (18) de dispositif de commande auquel ledit actionneur (16) est connecté et définissant le niveau de tension à régler à cet endroit par l'au moins un dispositif de commande (14, 15) recevant l'instruction de commande, le dispositif de commande (14, 15) ne modifiant pas le niveau de tension défini par l'instruction de commande reçue du système informatique (12) lors du réglage du niveau de tension au port de communication (18).

2. Système (10) selon la revendication 1,
au moins certains des dispositifs de commande (14, 15) étant l'un parmi un PLC, un PAC, un ordinateur, un RTU, un capteur intelligent ou une E/S à distance.

3. Système (10) selon la revendication 1 ou 2,
l'instruction de commande étant déterminée indépendamment des dispositifs de commande (14, 15) et/ou, au moins pendant le fonctionnement normal, les dispositifs de commande (14, 15) ne générant pas d'instructions de commande pour les actionneurs (16).

4. Système (10) selon l'une quelconque des revendications précédentes,
le système informatique (12) comprenant au moins l'un des éléments suivants :
- un composant logiciel (104) définissant une spécification de données spécifique à un actionneur ;
- un composant logiciel (108) permettant la communication entre le système informatique (12) et au moins un dispositif de commande (14, 15) selon un protocole de communication spécifique au dispositif de commande ;
- un composant logiciel (102) qui fournit des informations utilisables pour générer des instructions de commande et/ou qui fournit les informations de mappage.

5. Système (10) selon l'une quelconque des revendications précédentes,
le système (10) étant adapté pour recevoir des signaux d'état relatifs à un état d'un environnement externe et au moins certaines des instructions de commande étant générées sur la base desdits signaux d'état.

6. Système (10) selon la revendication 5,
au moins un des signaux d'état étant généré par au moins un capteur (20) qui est connecté à un port de communication (18) de l'un des dispositifs de commande (14, 15).

7. Système (10) selon l'une quelconque des revendications précédentes,
le système informatique (12) étant configuré pour exécuter une pluralité d'applications logicielles (AAU), au moins certaines des applications logicielles (AAU) étant configurées pour générer des instructions de commande pour au moins un des actionneurs (16).

8. Système (10) selon la revendication 7,
comprenant en outre une interface homme-machine au moyen de laquelle des réglages des applications logicielles (AAU) peuvent être définis au moins indirectement.

9. Système (10) selon l'une quelconque des revendications précédentes,
les informations de communication étant fournies par au moins un pilote de dispositif de commande (34, 35), chaque pilote de dispositif de commande (34, 35) étant associé à un type spécifique de dispositif de commande.

10. Système (10) selon la revendication 9,
le système comprenant des dispositifs de commande de différents types et des pilotes de dispositifs de commande (34, 35) pour chacun de ces différents types.

11. Système (10) selon l'une quelconque des revendications précédentes,
le système (10) étant utilisé pour faire fonctionner des actionneurs (16) dans une maison privée, un environnement de bureau, un espace public, une installation de production, un bâtiment ou un espace commercial.

12. Système (10) selon l'une quelconque des revendications précédentes,
au moins un des actionneurs (16) étant ou faisant partie de l'un des éléments suivants :
- une pompe à chaleur ;
- un système de chauffage ;
- un système HVAC ;
- un système d'éclairage ;
- un système d'actionnement de porte ;
- un système d'actionnement de fenêtre ;
- un système d'actionnement de stores de fenêtre ;
- un appareil de jardinage ;
- un appareil ménager ;
- un système photovoltaïque ;
- un système multimédia ;
- un système de gestion de l'énergie ;
- un système de sécurité et/ou de surveillance domestique.

13. Procédé pour commander des actionneurs distribués (16),
les actionneurs (16) étant chacun connectés à un dispositif de commande parmi une pluralité de dispositifs de commande (14, 15) par l'intermédiaire d'au moins un port de communication (18) d'un dispositif de commande respectif (14, 15) et le procédé comprenant :
la détermination, par l'intermédiaire d'un système informatique (12) qui est connecté à chaque dispositif de commande (14, 15) par l'intermédiaire d'au moins une liaison de communication (19), d'une instruction de commande sur la base de laquelle au moins un des actionneurs (16) peut être commandé ;
le procédé étant **caractérisé en ce qu'**il comprend en outre :
la réalisation, au moyen d'un composant logiciel (106) compris par le système informatique (12), d'une transformation de données spécifique à un actionneur en transformant une valeur de consigne souhaitée définie par l'instruction de commande, la valeur de consigne étant un paramètre d'état ou un paramètre opérationnel souhaité de l'au moins un actionneur (16), en un niveau de tension requis pour atteindre ledit état ou fonctionnement, le niveau de tension devant être réglé au niveau du port de communication (18) du dispositif de commande auquel ledit actionneur (16) est connecté, de sorte que l'instruction de commande définit le port de communication (18) du dispositif de commande auquel ledit actionneur (16) est connecté ainsi que le niveau de tension à régler à cet endroit ; et
l'envoi de l'instruction de commande au dispositif de commande (14, 15) auquel ledit au moins un actionneur (16) est connecté à l'aide d'au moins les informations suivantes :
- des informations de communication permettant de communiquer avec les dispositifs de commande (14, 15) ;
- des informations de mappage indiquant quel port de communication (18) de chaque dispositif de commande (14, 15) est connecté à quel actionneur (16) ; et
le réglage par l'au moins un dispositif de commande (14, 15) recevant l'instruction de commande du niveau de tension au port de communication (18) sans modifier le niveau de tension défini par l'instruction de commande reçue du système informatique (12).
